# EUROPEAN PATENT APPLICATION

(11) **EP 4 528 546 A1**
(43) Date of publication of application: **26.03.2025**
(21) Application number: 24201756.4
(22) Date of filing: 20.09.2024
(51) Int. Cl.: G06F 16/953

(54) **SYSTEMS AND METHODS FOR IDENTIFYING SEARCH TOPICS**

(30) Priority: 22.09.2023 AU 2023233186
(71) Applicant: Canva Pty Ltd., Surry Hills, New South Wales 2010 (AU)
(72) Inventor: YURUKOV, Nikola Atanasov, Surry Hills, 2010 (AU); LIANG, Xin, Surry Hills, 2010 (AU); ESSA, Moustafa Fathi Moustafa, Surry Hills, 2010 (AU); CHAU, Edwin, Surry Hills, 2010 (AU)
(74) Representative: Brown, Alexander Edward

(57) **Abstract**

Described herein is a computer implemented method including: retrieving historical search data including a plurality of historical search queries corresponding to historical searches for content items provided by a content delivery platform; processing the historical search data to determine a plurality of search topics, each search topic corresponding to a group of semantically similar historical search queries. The method further includes performing a first search for content items provided by the content delivery platform that are relevant to the first search topic and determining, based on results of the first search, a first content score that provides a measure of how much content provided by the content delivery platform is relevant to the first search topic and determining, based on the first content score, whether a content gap exists for the first search topic. In response determining that the content gap exists, a first content gap alert is generated.

## Description

### TECHNICAL FIELD

Aspects of the present disclosure are directed to systems and methods for identifying search topics.

### BACKGROUND

Commercial software products are available to serve extremely wide ranging functions and are aimed at users of varying levels of competency. A common function provided by many software products is to provide access to content. For example, software products often include one or more databases that store content and provide a search function by which a user can input a search query relating to a particular topic that the user wishes to search for.

In some cases a search may yield results that include content relating to the particular topic that was searched. In other cases, however, a search may yield relatively few or no results that are relevant to the searched the particular topic, or may even return no results at all. Searches that yield relatively few or no results of relevance to a searched topic limit the usefulness of the product and may turn users away from using a particular product.

Whilst simply increasing the breadth of content provides a greater chance of any search query returning useful results to a user, adding content that is rarely or never sought out by a user provides little or no value.

### SUMMARY

Described herein is a computer implemented method for a computer implemented method including: retrieving, from a search query database, historical search data, the historical search data including a plurality of historical search queries, each historical search query corresponding to a historical search for content items provided by a content delivery platform; processing the historical search data to determine a plurality of search topics, each search topic corresponding to a group of semantically similar historical search queries; selecting a first search topic from the plurality of search topics; generating a first search topic descriptor corresponding to the first search topic; performing a first search, wherein the first search is a search for content items provided by the content delivery platform that are relevant to the first search topic, and wherein performing the first search causes generation of a first set of search results; determining, based on the first set of search results, a first content score that provides a measure of how much content provided by the content delivery platform is relevant to the first search topic; determining, based on the first content score, whether a content gap exists for the first search topic; and in response determining that the content gap exists for the first search topic, generating a first content gap alert indicating that the content gap exists for the first search topic.

### BRIEF DESCRIPTION OF THE DRAWINGS

In the drawings:
FIG. 1 is a diagram depicting a networked environment in which various features of the present disclosure may be performed.
FIG. 2 is a block diagram of an example computer processing system.
FIG. 3 is a flowchart depicting operations performed to identify content gaps in content provided by a content delivery platform.
FIG. 4 is a flowchart depicting operations performed to process historical search data to determine search topics.
FIG. 5 is a flowchart depicting operations performed to map a search topic to content item metadata.
FIG. 6 is a flowchart depicting operations performed to determine a content score for a search topic.
FIG. 7 is a conceptual block diagram showing relationships of various data as it proceeds through operations described herein.

While the description is amenable to various modifications and alternative forms, specific embodiments are shown by way of example in the drawings and are described in detail. It should be understood, however, that the drawings and detailed description are not intended to limit the invention to the particular form disclosed. The intention is to cover all modifications, equivalents, and alternatives falling within the scope of the present invention as defined by the appended claims.

### DETAILED DESCRIPTION

In the following description numerous specific details are set forth in order to provide a thorough understanding of the present invention. It will be apparent, however, that the present invention may be practiced without these specific details. In some instances, well-known structures and devices are shown in block diagram form in order to avoid unnecessary obscuring.

As described above, many types of software products provide users with a mechanism to search for content items. As one example, a software-based graphic design platform may provide various types of content items that a user may search for when creating and editing graphic designs. As two examples, the types of content items provided by a graphic design platform may include templates (that provide a user with a starting point from which to create their own graphic design or visual presentation) and/or stock media items (such as photographs, graphics, videos, audio clips, and/or other types of media items which a user may add to a design being created or edited). To enable users to find content items, the graphic design platform may provide a search engine or function that allows a user to submit a search query. When a search query is submitted, the platform identifies and returns content items that are relevant (or potentially relevant) to the submitted query.

As also discussed above, the usefulness of a platform such as this can be influenced by its ability to provide relevant content items in response to a user's search query. In light of this, it is desirable to provide mechanisms that operate to automatically identify search topics (that is, topics that are frequently searched for by users). Where search topics are identified, it may be further desirable to identify if one or more of the identified search topics relate to a content gap - that is where a search topic relates to relatively few or no relevant content items provided by the platform.

The systems and methods disclosed herein are generally concerned with automatically identifying content gaps in content items provided by a content delivery platform.

In the present context, a content delivery platform is a system (or a set of systems) that operate to serve content items of one or more content item types to users. Content delivery platforms may operate solely to serve content items to users or may also provide additional services or functions.

In the present context, a content delivery platform provides a search function or mechanism that allows a user (human or programmatic) to submit a search query. On receipt of a search query, a content delivery platform searches for and returns content items that are identified as being relevant (or potentially relevant) to the search query.

In the embodiments described herein, content items provided by a content delivery platform are associated with content item metadata. The particular types of metadata associated with (and available to be associated with) a content item will depend on the type(s) of content items that are provided and the particular content delivery platform in question. Generally speaking, however, content item metadata can be used to perform searches for content items and to organise content items.

In the present context, the term content gap refers to a gap in the content items that are provided by a content delivery platform. In particular, a content gap may be determined to exist where a search query results (or would result) in relatively few or no relevant content items being identified.

For illustrative purposes, certain features of the present disclosure will be described in the specific example context of a content delivery platform that takes the form of a graphic design platform, and with specific reference to content items that are graphic design templates.

In this example context, templates content items are associated with content item metadata that includes categorisation metadata and attribute metadata.

In this example, categorisation metadata includes category type metadata items (which are used to define a category for a content item) and subcategory type metadata items (which are used to define a subcategory for a content item). Together, the category and subcategory type metadata items provide a categorisation architecture for the content items of the content delivery platform. In particular, the category and subcategory type metadata items provide for a hierarchical organisation of content items, with the category defining a top-level categorisation and the subcategory defining a secondary-level categorisation. Such a categorisation architecture may be mirrored in a URL structure that is used by the content delivery platform. For example, a category type metadata item may be "Instagram" and a subcategory type metadata item may be "birthday". These metadata items may map to a URL such as "https://www.content.com/instagram/birthday/".

In this example, the attribute metadata provides for further classification of the content delivery platform's content items. In particular, in this example context attribute metadata allows content items to be classified with greater accuracy than classification by keyword alone would allow. In this particular example, the attribute metadata for a content item defines a set of one or more attribute type metadata items. Each attribute type metadata item corresponds to a particular attribute and takes a value that describes that attribute. By way of example, each attribute type metadata item may be a key-value pair in which the key defines a particular attribute and the value is a phrase (one or more words) that describes or characterises that attribute. By way of example, an attribute type metadata item for a content item may be "Theme": "Personal trainer". This attribute type metadata item indicates that the theme of the content item is "personal trainer". Attribute type metadata items defining any appropriate attribute type for the content items in question may be made available. For template type content items, attributes such as "Style" and "Theme" (used, respectively, to indicate a style and a theme of a content item) may be appropriate.

In the context of such a content delivery platform, a user may, by way of example, search for templates with a query such as "Instagram birthday card with dogs". If such a search returns numerous relevant Instagram birthday card templates it may be the case that no content gap for this particular search query exists. Conversely, if such a search returns no or relatively few (when compared, for example, to numbers of templates returned for other searches) relevant templates, it may be the case that a content gap for this particular search topic does exist.

While a graphic design platform and template content items with the specific metadata described above are provided as an example, the techniques described herein may be applied (or be adapted to be applied) to other types of content delivery platforms, other types of content items, and/or content items associated with other types of metadata. As one further example, the content delivery platform may also (or as an alternative) provide a service that allows users to search for content items that are media items (for example photographs, graphics, audio clips, videos, and/or other media items). In this context, the techniques described herein may be applied to identify content gaps in the media items that are provided by the platform: that is, to identify where few or no media items are available to be served to users in response to a search query. By way of yet further example, the content delivery platform may be website (or other online resource) such as a wiki that provides content items in the form of webpages (or other resources) that provide information on certain topics.

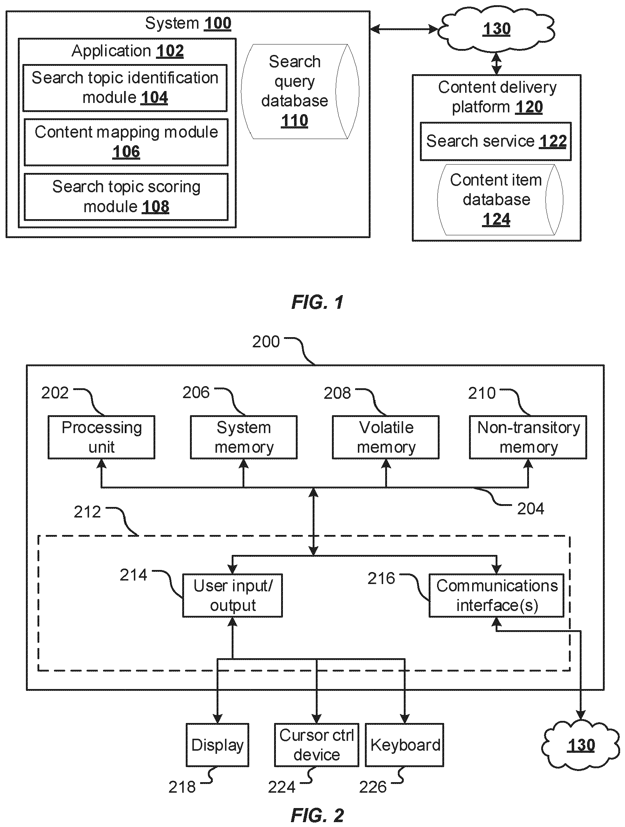

The techniques disclosed herein are computer implemented techniques that are performed by one or more computer processing systems. FIG. 1 depicts a networked environment that includes a computer processing system 100 and a content delivery platform 120 that both connect to a communications network 130.

In the present example, system 100 is a computer processing system or a set of interconnected computer processing systems that are configured to perform the functions described herein by execution of a software application (or a set of software applications) 102 - that is, computer readable instructions that are stored in a storage device (such as non-transitory memory 210 described below) and executed by a processing unit of the system 100 (such as processing unit 202 described below).

In the present example, application 102 includes a number of modules which interoperate to automatically determine search topics and (in certain embodiments) determine whether search topics relate to content gaps. The operation of these modules is discussed in detail below and they include: a search topic identification module 104; a content mapping module 106; and a search topic scoring module 108.

In the present example, system 100 includes a search query database 110 which stores historical search data in respect of searches performed by content items that are provided by a content delivery platform such as 150. In the illustrative example of a graphic design platform and template content items, the historical search data includes data related to searches that have been performed by users seeking particular types of templates. In other contexts, the historical search data may also (or alternatively) include data related to searches for other types of content items (e.g. media items). Although database 110 is shown as part of system 100 for illustrative purposes, database 110 may be a cloud based database and thus communicable via network 130. Further, other search query databases may be external to system 100 and connected to system 100 via network 130. Further, in other embodiments, system 100 will include one or more internal databases such as database 110 (located locally or cloud based) and be in communication with one or more external databases.

In the present example, system 100 is connected to a communications network 130. Via network 130, system 100 can communicate with (e.g. send data to and receive data from) other computer processing systems, for example content delivery platform 120.

Content delivery platform 120 is also a computer processing system (or a set of interconnected computer processing systems). In the present, simplified example, the content delivery platform includes a search service 122 and a content item database. Generally speaking, search service 122 is a computer application (or set of applications) that receives search queries via network 130, searches the content item database 124 based on received search queries, and returns relevant content items. In the present example, content item database 124 stores content items (and associated content item metadata).

While content delivery platform 120 is depicted with a single content item database 124 it may include multiple databases. For example, platform 120 may include databases storing different types of content items may, databases storing historical search data, and/or databases storing other data relevant to the operation of the content delivery platform (e.g. administrative data such as user account data and the like).

Content delivery platform 120 may (and typically will) also include additional applications or services that operate to provide additional functions to users of the content delivery platform 120. For example, where content delivery platform 120 is a graphic design platform per the above example, it will typically include various applications that allow users to create, edit, share, publish and/or otherwise work with graphic designs.

System 100 and content delivery platform 120 may be operated by different entities. For example, system 100 may be operated by a one entity and provide content gap identification services to one or more content delivery platforms that are operated by other entities. Alternatively, system 100 and content delivery platform may be operated by the same entity. In this case, instead of system 100 and content delivery platform 120 being separate systems interconnected via a network 130 system 100 may itself be a content delivery platform and include a search service and content item database (and any other relevant content delivery platform applications).

System 100 and content delivery platform 120 are both (or both include one or more) computer processing systems. Typically system 100 and content delivery platform 120 will each include one or more server computer processing systems, Desktop, laptop, or alternative computer processing systems may, however, be used. By way of example, system 100 and content delivery platform 120 may each include one or more computer processing system that have an architecture that is the same as (or similar to) computer processing system 200 of FIG. 2, described below.

Turning to FIG. 2, a block diagram of a computer processing system 200 configurable to implement embodiments and/or features described herein.

System 200 is a general purpose computer processing system. It will be appreciated that FIG. 2 does not illustrate all functional or physical components of a computer processing system. For example, no power supply or power supply interface has been depicted. However system 200 will either carry a power supply or be configured for connection to a power supply (or both). It will also be appreciated that the particular type of computer processing system will determine the appropriate hardware and architecture, and alternative computer processing systems suitable for implementing features of the present disclosure may have additional, alternative, or fewer components than those depicted.

Computer processing system 200 includes at least one processing unit 202. The processing unit 202 may be a single computer processing device (e.g. a central processing unit, graphics processing unit, or other computational device), or may include a plurality of computer processing devices. In some instances, where a computer processing system 200 is described as performing an operation or function all processing required to perform that operation or function will be performed by processing unit 202. In other instances, processing required to perform that operation or function may also be performed by remote processing devices accessible to and useable (either in a shared or dedicated manner) by system 200.

Through a communications bus 204 the processing unit 202 is in data communication with a one or more machine readable storage (memory) devices which store computer readable instructions and/or data which are executed by the processing unit 202 to control operation of the processing system 200. In this example, system 200 includes a system memory 206 (e.g. a BIOS), volatile memory 208 (e.g. random access memory such as one or more DRAM modules), and non-transitory memory 210 (e.g. one or more hard disk or solid state drives). Database 110 may form part of non- transitory memory 210.

System 200 also includes one or more interfaces, indicated generally by 212, via which system 200 interfaces with various devices and/or networks. Generally speaking, other devices may be integral with system 200, or may be separate. Where a device is separate from system 200, the connection between the device and system 200 may be via wired or wireless hardware and communication protocols, and may be a direct or an indirect (e.g. networked) connection.

Generally speaking, and depending on the particular system in question, devices to which system 200 connects include one or more input devices to allow data to be input into/received by system 200 and one or more output device to allow data to be output by system 200. Example devices are described below. However it will be appreciated that not all computer processing systems will include all mentioned devices, and that additional and alternative devices to those mentioned may well be used.

For example, system 200 may include or connect to one or more input devices by which information/data is input into (received by) system 200. Such input devices may, for example, include a keyboard 226, a cursor control device 224 (such as a mouse or trackpad), a touch screen display 218, and/or other input devices. System 200 may also include or connect to one or more output devices that are used to output information. Such output devices may, for example, include one or more display devices 218 (e.g. a LCD, LED, touch screen, or other display devices) and/or other output devices. System 200 may also include or connect to devices which act as both input and output devices, for example touch screen displays 218 (which can receive touch signals/input and display/output data) and memory devices (from which data can be read and to which data can be written). System 200 may also, or alternatively, connect to input/output devices via a communications interface 216 and network 130

System 200 also includes one or more communications interfaces 216 for communication with a network, such as network 130 of FIG. 1. Via the communications interface(s) 216, system 200 can communicate data to and receive data from networked systems and/or devices.

System 200 may be any suitable computer processing system, for example, a server computer system, a desktop computer, a laptop computer, a netbook computer, a tablet computing device, a mobile/smart phone, a personal digital assistant, or an alternative computer processing system.

System 200 stores or has access to one or more computer applications (which may also referred to as computer software or computer programs). Generally speaking, such applications include computer readable instructions and data which, when executed by processing unit 202, configure system 200 to receive, process, and output data. Instructions and data can be stored on non- transitory machine readable medium such as 210 accessible to system 200. Instructions and data may be transmitted to/received by system 200 via a data signal in a transmission channel enabled (for example) by a wired or wireless network connection over an interface such as communications interface 216.

Typically, one application accessible to system 200 will be an operating system application. In addition, system 200 will store or have access to applications which, when executed by the processing unit 202, configure system 200 to perform various computer-implemented processing operations described herein. For example, and referring to FIG. 1 above, system 100 includes (and executes) application 102 and content delivery platform 120 includes (and executes) a search service application 122.

In some cases part or all of a given computer-implemented method will be performed by system 200 itself, while in other cases processing may be performed by other devices in data communication with system 200.

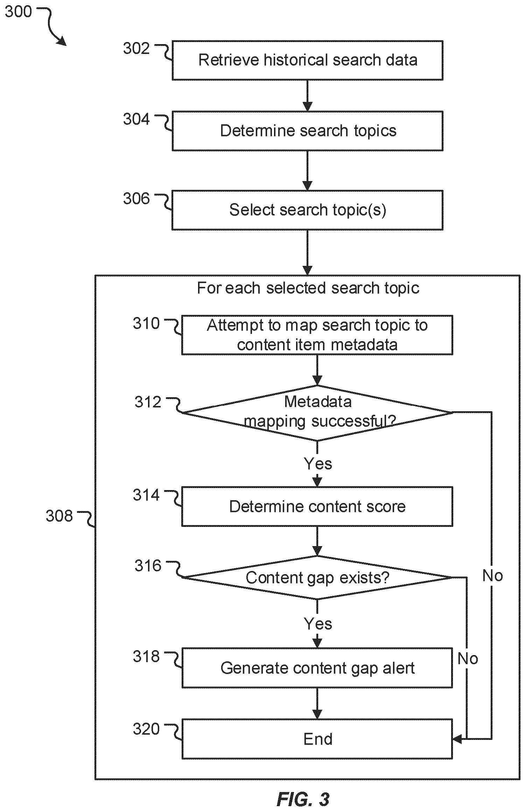

Referring to FIG. 3, a method 300 for determining if a set of content items that are provided by a content delivery platform include one or more content gaps will be described.

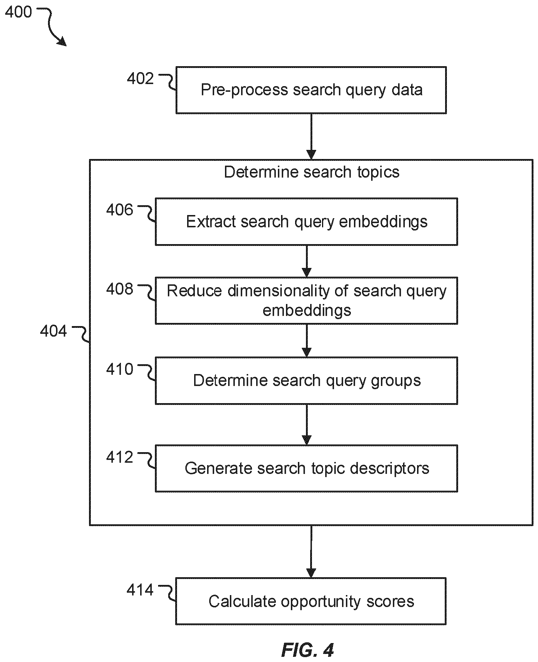

The operations of method 300 will be described as being performed by application 102 (and the various associated modules) running on system 100. The operations could, however, be performed by one or more alternative applications running on system 100 and/or one or more alternative computer processing systems. Method 300 provides a relatively high level description of an entire content gap determination process. Portions of method 300 will be described in greater detail with reference to FIGS. 4 to 6.

Application 102 may be configured to perform method 300 (or certain operations thereof) at various times. For example, application 102 may be configured to automatically perform method 300 at regular time intervals - for example on a weekly basis, a monthly basis, or at any other time interval. Application 102 may also, or alternatively, be configured to perform method 300 on demand - for example in response to a request to perform method 300. Such a request may, for example, be received from a content delivery platform such as 120 (or a user of such a platform). A request to perform method 300 may be accompanied by one or more parameters, for example: a time period parameter that defines the historical search data that should be retrieved (as described below at 302); a data source parameter that defines whether internal and/or external search data should be retrieved (as described below at 302); a country parameter (that defines one or more assumed countries of origin that historical search data is to be retrieved for); and/or other parameters.

At 302, application 102 retrieves historical search data from one or more databases. Generally speaking, historical search data includes data in respect of searches for content items of the content delivery platform that have been performed.

In the present embodiments, historical search data may include what will be referred to as internal search data and/or external search data.

As used herein, internal search data is historical search data in respect of searches that have been performed using the content delivery platform 120 itself (that is, using a search function of the content delivery platform for which content gaps are being identified). Internal search data is, therefore, search data that is directly collected and stored by the content delivery platform 120 in question. In embodiments where system 100 and the content delivery platform 120 are operated by the same entity, internal search data may be stored and retrieved from a search query database such as 110. In embodiments where system 100 and the content delivery platform 120 are operated by different entities, internal search data may be retrieved from (or provided by) the content delivery platform 120. In this case the internal search data may be stored (at least temporarily) by system 100 in a database such as search query database 110.

As used herein, external search data refers to search data in respect of searches that have been performed using a search engine or service that is not part of the content delivery platform. Such data is generally collated and stored by a third party external data provider service, and may be retrieved from (or provided by) one or more external data sources (not shown) maintained by such a third party. External search data may also be stored (at least temporarily) by system 100 in a database such as search query database 110.

At 302, application 102 may be configured to retrieve only internal search data, only external search data, or both internal and external search data. This may be based on default operational parameters or may be based on an input parameter to method 300.

In the present embodiments, the historical search data that is retrieved at 302 includes a set of search datasets. Each search dataset corresponds to a particular search that has been performed and includes search metadata and query data in respect of that search.

The search metadata for a given search dataset provides information concerning the search that the search dataset corresponds to. The search metadata that is available and included in a search dataset will depend on context and implementation. Further, the search metadata available for internal search datasets may be different to the search metadata available for external search datasets. By way of example, however, search metadata may include search metadata items such as: an event date (indicating when the search was performed); a country identifier (indicting an assumed country from which the search originated, which may be determined for example based on an IP address associated with the search); and/or other search metadata items.

The query data of a given search dataset provides data on the actual query submitted with the search that the search dataset corresponds to. Once again, the particular query data that is available and included in a search dataset will depend on context and implementation. In many embodiments, searches will be text based searches. In this context, a text based search is a search based on a text string that is either directly entered by a user (e.g. by a keyboard) or that is generated based on other user input (e.g. by converting non-text media such as audio, image, video or other media to text). In this case the query data may include the submitted text string - e.g. a set of one or more words. In other embodiments searches may be non-text searches - e.g. an image based search based on an input image. In this case the query data may include a copy of the non-text input and/or other data derived from that input.

In certain embodiments, application 102 may retrieve historical search data at 302 based on search metadata. For example, application 102 may be configured to retrieve search query data in respect of search queries performed in a particular date range. Such a date range may be based on an input parameter (as described above). For example, in certain implementations application 102 may be configured to automatically perform method 300 on a periodic bases. In this case, application 102 may retrieve historical search data only in respect of searches performed since the previous time method 300 was performed. Retrieval of historical search data in respect of searches performed in a particular date range can be done, for example, based on the event date metadata of the search datasets.

At 304, application 102 processes the historical search data retrieved at 302 to determine a set of one or more search topics. In the present embodiments, and generally speaking, application 102 processes the historical search data to identify groups of semantically similar search queries. Each group of semantically similar search queries corresponds to a search topic, and for each search topic identified application 102 generates a search topic descriptor (e.g. a set of one or more words) that is representative of the semantic meaning of the search queries within that group.

In certain embodiments, application 102 also calculates an opportunity score for each search topic. In such embodiments, a search topic's opportunity score provides a measure of how popular the search topic is. A search topic's opportunity score may, for example, be used to determine whether that search topic is selected for further processing at 306.

Processing the historical search data retrieved at 302 to determine a set of one or more search topics (and, in certain embodiments to calculate opportunity scores) is described further with reference to FIG. 4.

At 306, application 102 selects one or more of the search topic determined at 304 for further processing.

In certain embodiments, application 102 is configured to select search topics at 306 based on opportunity scores that have been calculated. For example, a threshold opportunity score may be defined and application 102 may be configured to select all search topics with opportunity scores greater than or equal to the threshold opportunity score (or, alternatively, may select up to a maximum number of search topics with opportunity scores greater than or equal to the threshold opportunity score). In this case, if no search topic has an opportunity score that is greater than or equal to the threshold opportunity score, application 102 may select no search topics at 306 (in which case method 300 ends).

By way of alternative example, application 102 may be configured to select a defined number of search topics at 306 based on opportunity score - e.g. the *n* search topics with the top *n* opportunity scores. In this case *n* may be a predefined number (e.g. 5, 10, 15, or an alternative number), or may be calculated by application 102 (e.g. as a percentage of the total number of search topics determined - e.g. 5%, 10% or another percentage value).

Selecting search topics for further processing based on opportunity scores can be advantageous where there is a need or desire to reduce computational processing load. In this case, search topics that (based on the opportunity score) do not appear to be particularly popular can be precluded from further processing or deprioritised in favour of search topics with higher opportunity scores.

In alternative embodiments, however, opportunity scores are not calculated and/or are not used to select search topics at 306. In such embodiments application 102 may be configured to select all search topics determined at 304 for further processing, or may be configured to select search topics based on alternative criteria.

At 308, application 102 processes any search topic that is selected at 306. A search topic is processed at 308 to determine whether a content gap in respect of that search topic exists and, if so, to generate a content gap alert. This processing is described with reference to processing blocks 310, 312, 314, 316, and 318. Search topics selected at 306 may be processed in any order, such as from highest to lowest opportunity score (where opportunity scores are calculated/available), or in parallel. For the sake of simplicity, 310, 312, 314, 316, and 318 will be described with reference to a single search topic.

At 310, application 102 processes the selected search topic (or, more specifically, a search topic descriptor generated for the search topic) to attempt to map the search topic to content item metadata that is used by the content delivery platform.

The particular content item metadata that application 102 attempts to map a search topic to will depend on implementation. By way of example, however, in the example context of template content items and content item metadata described above, application 102 attempts to map a search topic to categorisation metadata and attribute metadata.

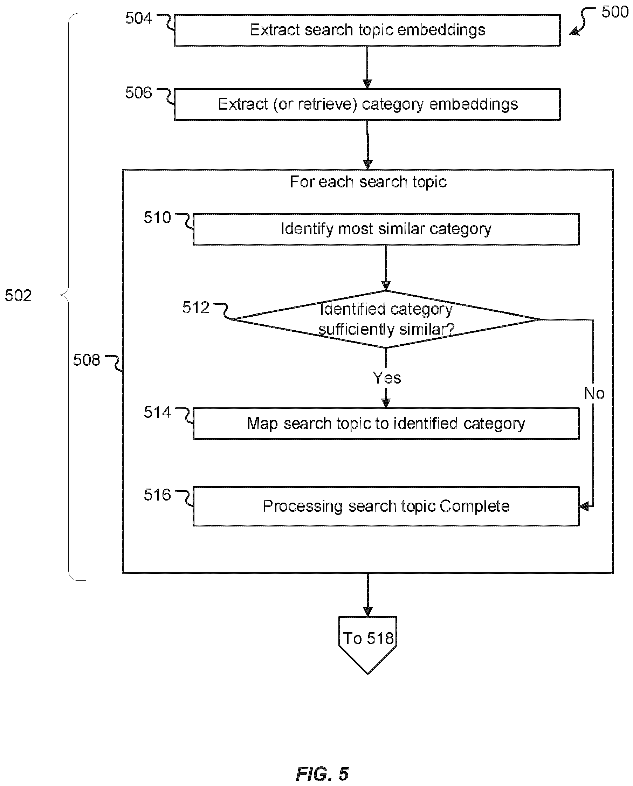

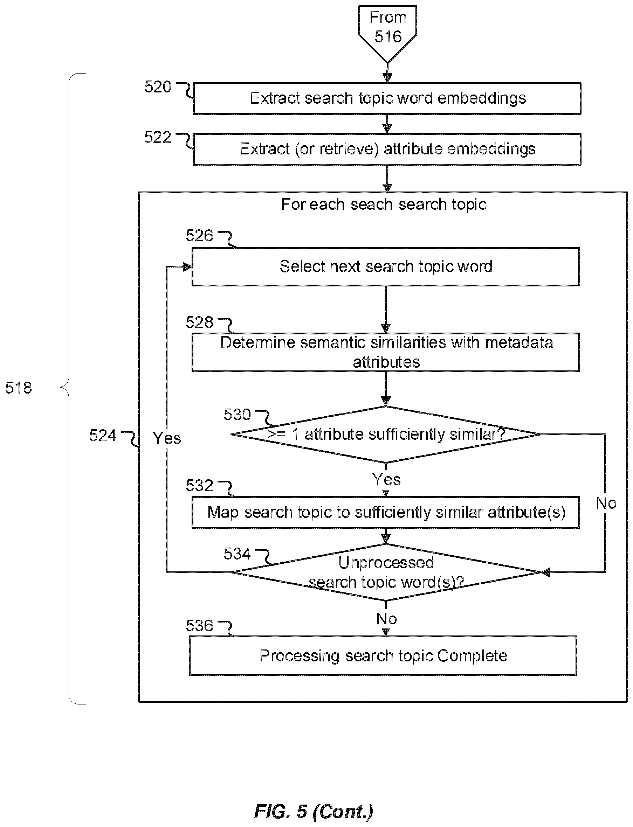

In the present embodiment, machine learning techniques such as natural language processing are used to map search topics to content item metadata at 310, through semantic similarity matching. This is described further with reference to FIG. 5.

At 312, application 102 determines whether the search topic was successfully mapped to content item metadata. If so, processing proceeds to 314.

In the present embodiment, if the search topic is not mapped to content item metadata at 310, processing of the selected search topic is complete (and no content gap is identified). This is on the basis that if the search topic cannot be mapped to content item metadata it may be too different to the types of content items that the content delivery platform 120 provides and, therefore, even though the search topic may indicate a content gap it is not necessarily a content gap that is desirably filled. In alternative embodiments, if a search topic is not mapped to content item metadata application 102 may add the search topic to an exceptions or other list to be sent to a user. Such a user can then manually inspect any search topics that were not mapped to content item metadata and, if desired, take further action.

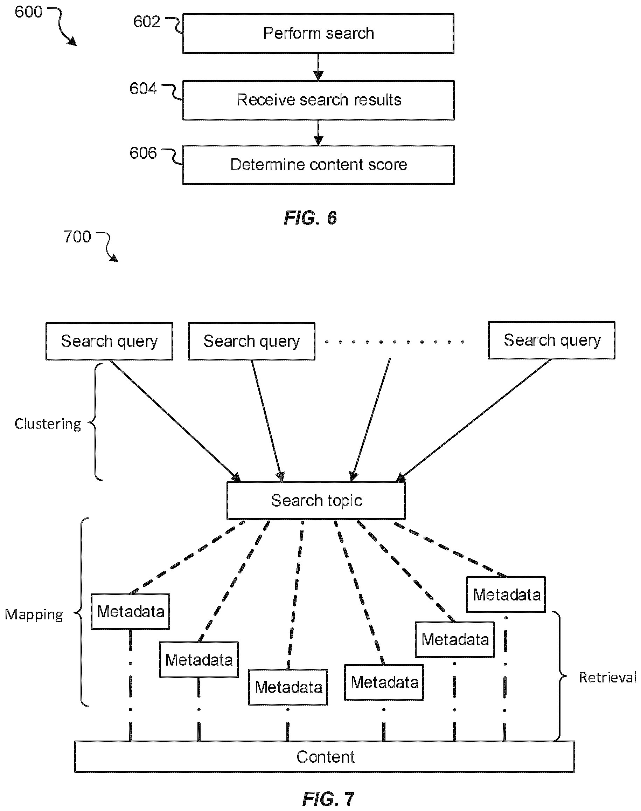

At 314, application 102 determines a content score for the selected search topic. Generally speaking, a search topic's content score provides a measure how much content provided by the content delivery platform 120 (if any) is relevant to the search topic. Calculation of a content score for a selected search topic is described below with reference to FIG. 6. Generally speaking, however, this involves performing a search on the content delivery platform 120 based on the selected search topic (e.g. based on the search topic's descriptor and/or the content item metadata mapped at 310) and determining the content score based on the number of content items (if any) that the search identifies.

At step 316, application 102 determines whether a content gap exists for the selected search topic.

In the present embodiments, application 102, determines whether a content gap exists based on the search score determined at 314 and a content gap threshold score. In particular, if the search topic score determined at 314 is less than the content gap threshold score, application 102 determines that a content gap exists for the search topic and processing proceeds to 318. Otherwise, application 102 determines that no content gap exists for the search topic and processing the selected search topic is complete (as indicated at 320).

By way of example, in certain embodiments the search topic score may be a count of the content items that are identified in a search that is performed based on the selected search topic. In this case, the content gap threshold score may be set to a number that indicates a desired number of content items that should be returned for a search topic. In this case the content gap threshold score may be a predefined value or may be calculated based on other data. As one example, the content gap threshold score may be predefined value of 1 (in which case only search topics that return no results will be determined to have a content gap). Alternatively, the content gap threshold score may be a predefined value of 10, 15, 20, or an alternative number.

As a further example, the content gap threshold score may be calculated based on a total number of content items (of the relevant type) that are provided by the content delivery platform 120. For example, the content gap threshold score may be set to 1% (or an alternative % value) of the total number of content items (of the relevant type) that are provided by the platform 120.

By way of further example, in embodiments that involve calculating an opportunity score for each search topic, the content gap threshold score for a given search topic may be calculated based on that topic's opportunity score. In this case, and generally speaking, for a search topic with a relatively low opportunity score (indicating relatively few searches corresponding to that topic have been performed) a relatively low content gap threshold score will be calculated (on the basis that if relatively few searches corresponding to the search topic are performed a relatively low number of content items for that search topic is acceptable). Conversely, for a search topic with a relatively high opportunity score (indicating a relatively large number searches corresponding to that topic have been performed) a relatively high content gap threshold score will be calculated (on the basis that if many searches corresponding to the search topic are performed a relatively high number of content items for that search topic should be provided).

If, at 318, application 102 determines that a content gap exists for the selected search topic, processing proceeds to 318. At 318, application 102 generates a content gap alert to inform one or more users that a content gap in respect of the selected search topic exists.

Generally speaking, application 102 may generate a content gap alert may include relevant information in respect of the search topic. This may include one or more of: the search topic descriptor (determined at 304); the content item metadata that the search topic was mapped to (at 310); any parameters used when retrieving the search query data at 302 (e.g. a date range if only search query data for a particular date range was considered); the search topic score calculated at 314; the content gap threshold used (or calculated) at 316; and/or other relevant data in respect of the selected search topic and identified content gap.

Application 102 may be configured to generate a content gap alert in various ways. For example, application 102 generate one or more electronic communications and communicate that/those communications to one or more defined recipients. Such communications may, for example, include one or more emails, instant messages, and/or other electronic communications. Alternatively, or in addition, application 102 may cause an alert to be displayed in a user interface of one or more predefined users (e.g. one or more administrative users of system 100 and/or content gap platform 120). By way of further example, application 102 may also (or alternatively) generate a content gap alert by setting a defined data flag and/or adding a record to a content gap report that is sent to (or accessed by) appropriately permissioned users at any appropriate time.

In embodiments in which opportunity scores are calculated for search topics, these opportunity scores may also be used when generating content gap alerts. For example, a calculated opportunity score (or a value based thereon) may be included in any content gap alert that is generated. In this case, the opportunity score may be used to prioritise content gaps and the creation of content items to fill those gaps. In particular, creation of content items to fill a content gap that corresponds to a search topic with a relatively high opportunity score (indicating a more frequently searched - and by inference more popular - topic) may be prioritised over creation of content items to fill a content gap that corresponds to a search topic with a relatively low opportunity score (indicating a less frequently searched - and by inference less popular - topic).

Following generation of the content gap alert at 318, processing of the selected search topic is complete (as indicated at 320).

Various operations and actions may be performed (manually or automatically) in response to a content gap alert being generated.

For example, generation of a content gap alert may result in content creators being tasked with generating content items to fill the content gap. In this case, the search topic descriptor that the content gap corresponds to may be used to guide for content item generation. Further, once a new content item is generated for the content gap, the content item can be associated with metadata based on the metadata that the search topic has been mapped to. For example, a content gap may be identified in respect of a search topic that: has a topic descriptor of "personal trainer flyer"; is mapped to a metadata category of "flyer"; and is mapped to metadata attributes of "THEME: personal" and "THEME: personal trainer". In this case, a content item creator can generate a content item (e.g. a template) that can be used for a "personal trainer flyer" and, once that template has been created can assign the metadata category of "flyer" and metadata attributes of "THEME: personal" and "THEME: personal trainer" to the content item.

Referring now to FIG. 4, a method 400 for processing historical search data to determine search topics will be described. Method 400 may, for example, be performed at 304 of method 300 described above. In this case, method 400 is performed on the historical search data retrieved at 302 (and, in particular, on the query data of the search datasets that are retrieved).

The operations of method 400 will be described as being performed by module 104 of application 102. The operations could, however, be performed by one or more alternative modules of application 102, or one or more alternative applications running on system 100 and/or one or more alternative computer processing systems.

As described above, the historical search data that is processed in method 400 includes search query data in respect of content item searches that have been performed. Search queries are often unstructured. Further, search queries that are semantically the same or similar can contain take many different forms. At 402, therefore (and if required), module 104 performs pre-processing of the historical search data - and, specifically, the search query data of the historical search datasets.

Pre-processing is generally performed at 402 to improve the quality and further processing of the search query data. The specific pre-processing operation(s) performed (if any) will depend on the nature of the historical search query data and the manner in which search query groups are determined.

By way of example, if content item metadata is in a particular working language (e.g. English), pre-processing may be performed to filter out phrases that are not in the working language (e.g. to filter out non-English phrases). As another example, pre-processing may be performed to filter out one or more defined words or phrases - for example, pre-processing may be performed to filter out the word "template" (on the basis that for a search query such of "Instagram birthday post template" the word "template" will not assist in search topic determination). By way of still further example, pre-processing may be performed to identify and remove duplicate search phrases.

In alternative embodiments, pre-processing historical search data may not be required or performed at 402. As one example, this may be the case if historical search data is processed prior to being stored and retrieved. Alternatively, pre-processing may simply be omitted (though in some cases this may reduce the efficiency and or efficacy of the search topic determination process).

At 404, module 104 processes the search query data (as pre-processed at 402, if performed) to determine search topics.

In the present embodiments, determining search topics at 404 involves processing the historical search data to determine groups of semantically similar search queries. Each group that is identified corresponds to a search topic, and for each group, a search topic descriptor is generated to describe the semantic meaning of the search queries that form part of that group.

In the present embodiments, module 104 implements a clustering process to identify search topics. This is described with reference to processing blocks 406, 408, 410, and 412.

In the present embodiment, the processing performed to determine search topics is based on the BERTopic topic modelling technique as described in the paper "BERTopic: Neural topic modeling with a class-based TF-IDF procedure" by Maarten Grootendorst (arXiv:2203.05794). This paper describes neural topic modelling with respect to "documents", which can be considered analogous to the historical search queries that have been retrieved and (if performed) pre-processed at 402.

At 406, module 104 processes each historical search query (as pre-processed at 402 if performed) to extract a corresponding search query embedding. The search query embeddings extracted at 406 are intended to capture the semantic meanings of the search queries and may, therefore, be referred to as semantic embeddings. Processing a search query to extract an embedding may be performed in various ways and using any appropriate semantic analysis technique.

In the present embodiment, search query embeddings are extracted using a trained machine learning model. Any appropriate machine learning model may be used to extract search query embeddings. By way of specific example, module 104 may use a pre-trained model from the SentenceTransformers open-source library. For example, if English is the working language, the pre-trained "all-mpnet-base-v2" may be used to extract search query embeddings. By way of alternative example, if multi-language support is required or useful (e.g. where a different (or no specific) working language is being used) the pre-trained "paraphrase-multilingual-mpnet-base-v2" model may be utilised.

At 408, module 104 processes the search query embeddings extracted at 406 to reduce their dimensionality. In some embodiments dimension reduction need not be performed. Module 104 may reduce the dimensionality of the search query embeddings in any appropriate way. By way of example, module 104 may implement a nonlinear dimensionality reduction technique, such as a Uniform Manifold Approximation and Projection (UMAP) technique (or a technique based thereon).

At 410, module 104 determines search query groups (which may also be referred to as clusters). Search query groups are determined by processing the search query embeddings extracted at 406 and dimensionally reduced at 408 (if performed).

In the present embodiment, module 104 determines search query groups by implementation of a clustering algorithm (and, accordingly, the search query groups may be referred to as clusters). Any appropriate clustering algorithm may be used. The particular clustering algorithm selected, and the parameters of the algorithm, may depend on the nature of the search queries (and, therefore, their embeddings) and/or the nature of the content item metadata that the clusters are ultimately to be mapped to. In the present embodiment, a Hierarchical Density-Based Spatial Clustering of Applications with Noise (HDBSCAN) algorithm is used to determine search query clusters.

Clustering of the search query embeddings may be performed with the content item metadata that search topics are to be mapped to in mind. To illustrate this, consider the example content item metadata described above which includes categorisation metadata (in particular a category item and a subcategory item) and attribute metadata (which may include multiple attribute items that define various attributes). In this context, and in one particular example, data exploration has shown that search queries (and in particular internal search queries) tend to follow a structure that is aligned with the category/sub category hierarchy. Moreover, data exploration has shown that clustering using the HDBSCAN algorithm results in clusters that tend to be at the category level of the hierarchy. In this example embodiment, however, finer grained clusters that follow the category and subcategory hierarchy are of benefit.

Various approaches may be taken to achieve clustering at the desired level of granularity.

As one example, multiple clustering operations may be performed. For example, a first clustering operation may be performed to determine a first set of (relatively high level) first search query clusters. Each first search query cluster is associated with a set of one or more of the historical search queries (via the search query embeddings extracted at 406). Following this, a second clustering operation may be performed on at least one (or each) of the first search query clusters. For a given first search query cluster: the second clustering operation serves to determine a second set of (relatively granular) second search query clusters; and each second search query cluster is associated with a set of one or more of the historical search queries (via the search query embeddings extracted at 406) that are associated with the given first search query cluster. Each second seach query cluster then corresponds to a search topic. Where multiple clustering operations are performed, the first and second clustering operations may both utilise the same clustering algorithm (e.g. a HDBSCAN algorithm or an alternative clustering algorithm).

By way of alternative example, clustering at the desired level of granularity may be achieved by configuring a customised HDBSCAN model to pass into BERTopic. In this case, two parameters that may be tuned for the HDBSCAN model include:
- The "cluster_selection_epsilon" parameter, which can be used to set a threshold distance that controls how close data points are for clusters to be merged or split.
- A leaf ' cluster_selection method" parameter. Instead of reclustering a big cluster manually, this parameter will select leaf nodes from the tree, producing many small homogeneous clusters. Clusters having varying densities of search queries can still be obtained via this method, but there will be a tendency to produce a more fine grained clustering than using BERTopic with default settings.

Each search query group (or cluster) that is determined at 410 corresponds to a search topic.

At 412, module 104 generates a search topic descriptor for at least one (though typically each) search topic that is determined at 410. Generally speaking, the search topic descriptor for a given search topic is a phrase (e.g. a set of one or more words) that describes the semantic meaning of the search query group that the search topic corresponds to (or, more specifically, the semantic meaning of the search queries that belong to that group).

In the present embodiments, if a content gap is identified for a given search topic (as described below), that search topic's descriptor will become the canonical topic phrase that will be used to describe the newly-discovered topic in respect of which the content gap exists.

Module 104 may generate the search topic descriptor for a given group in various ways. In the present embodiment, which adopts a BERTopic approach, module 104 generates a search topic descriptor for a particular search query group based on the words of the search queries that belong to that group (and, in particular, the word frequency). In particular, a class-based Term Frequency - Inverse Document Frequency (class-based TF-IDF) process is used. In contrast to a traditional Term Frequency - Inverse Document Frequency (TF-IDF) process, which would compare important words between search results, the class-based TF-IDF process will treat all search queries in a given cluster as a single set of text (e.g. a single document), and extract the representative words from each cluster's document.

With respect to the example content item metadata described above, and in particular the category/subcategory hierarchy, it is desirable for the search topic descriptors that are generated at 412 to be as descriptive as the phrases at the subcategory level. These phrases have a tendency to be longer in terms of number of words. In this context, therefore, an n-gram range of (3,4) may be appropriate for generation of the search topic descriptors.

At the same time, however because a search topic descriptor will (where a corresponding content gap is identified) be used as the canonical topic phrase to describe the newly-discovered topic for which a content gap exists, it will typically be desirable for the search topic descriptor to be coherent, diversified and precise (as opposed, for example, to being repetitive and biased towards a certain set of words). To address this, the Maximal Marginal Relevance Coherence feature of BERTopic can be used to identify the coherent words whilst at the same time reducing overlap between the words themselves. This serves to filter out of words that do not meaningfully contribute to a search topic as well as increase the diversity of words that are similar to the topic descriptor by reducing the number of synonyms.

It will be appreciated that in alternate embodiments, techniques other than the BERTopic technique may be used to determine search topics at 404 (and or for various operations that are performed as part of that process, such as 406, 408, 410, and/or 412). For example, Latent Dirichlet Allocation (LDA) or Latent Semantic Analysis (LSA) may be used for semantic topic modelling (e.g. at 410 and 412), differing embedding techniques may be used at 406, and/or different dimensionality reduction techniques may be used at 408.

Following 404 one or more search topics have been determined and a search topic descriptor has been generated for each search topic.

As noted above, in certain embodiments, module 104 is configured to calculate an opportunity score for each search topic determined at 404. In such embodiments, module 104 calculates a search topic opportunity scores at 414 to provide a measure of how popular a given search topic is. Module 104 may be configured to calculate an opportunity score for a search topic in various ways.

In one embodiment, module 104 is configured to calculate a search topic's opportunity score based on the number of search queries that are assigned to the group (or cluster) that defines the search topic. (In such embodiments, de-duplication of search queries need not be performed when pre-processing the search query data at 402).

In alternative embodiments, module 104 may be configured to determine the opportunity score for a search topic based on other data. As one example, module 104 may use a third party service to obtain a search volume for a search topic and calculate the opportunity score based on that search volume. The search volume for a search topic is a measure of the number of searches that were performed in a predefined period (e.g. a week, month, or other period) and that relate to the search topic. The search volume for a search topic may be obtained by passing the search topic descriptor (or other data based thereon) to a service such keywordtool.io. In this example, the search volume for a given search topic may be normalised to a numerical value between 0 and 1 as the opportunity score.

It will be appreciated that in alternate embodiments, the opportunity score may be calculated in alternative ways and may take a value other than a value between 0 and 1.

Where opportunity scores are calculated for search topics, method 400 is complete after processing block 414. Where opportunity scores are not calculated, method 400 is complete following processing block 412.

It will be appreciated that the semantic topic modelling process described for determining search topics at 404 is an unsupervised technique. In order to evaluate the successfulness of the search topic determination process, various evaluation measures may be implemented, By way of example, the successfulness of the technique may be evaluated with reference to a topic coherence with normalized pointwise mutual information (NPMI) metric and a topic diversity metric.

The implementation of these metrics may, for example, be (or be based on) the techniques used in the "OCTIS : Optimizing and Comparing Topic Models is Simple!" library and described in: Silvia Terragni, Elisabetta Fersini, Bruno Giovanni Galuzzi, Pietro Tropeano, and Antonio Candelieri. 2021. OCTIS: Comparing and Optimizing Topic models is Simple!. In Proceedings of the 16th Conference of the European Chapter of the Association for Computational Linguistics: System Demonstrations, pages 263-270, Online. Association for Computational Linguistics. Metrics such as these may be used to evaluate the semantic topic modelling performed by module 104 during development (e.g. prior to deployment of system 100) and/or following deployment of the system.

Alternatively, although the topic modelling technique is unsupervised, hyperparameter tuning and configuration of the modelling technique can be validated with a curated dataset that has search phrases grouped into known topic clusters. Such a curated dataset may include a set of search queries that are known to lead to existing popular content items. The subcategories of these content items are used as the "ground truth" topics for the curated set of search queries. Semantic topic modelling can then be applied to the curated set of search queries, and the resultant search topics that are identified (e.g. the search query clusters) can then be compared with the "ground truth" topics to validate the configuration of the topic modelling technique.

Referring now to FIG. 5, a method 500 for mapping search topics to content item metadata (or attempting to do so) will be described. Method 500 may, for example, be performed at 310 of method 300 described above. In this case, method 500 is performed on the search topics that have been determined at 306.

The operations of method 500 will be described as being performed by module 106 of application 102. The operations could, however, be performed by one or more alternative modules of application 102, or one or more alternative applications running on system 100 and/or one or more alternative computer processing systems.

The processing performed by module 106 to map search topics to content item metadata will depend on various factors, including the manner in which search topics (and search topic descriptors) are generated and defined and the content item metadata that the search topics are being mapped to. In the present embodiment, module 106 maps search topics to content item metadata by use of semantic similarity matching techniques, however alternative approaches may be possible.

In order to illustrate search topic to content item metadata mapping, method 500 will be described with reference to the example context described above in which content item metadata includes category type metadata items and attribute type metadata items. Furthermore, method 500 will be described with reference to an approach that involves attempting to map each search topic to a category (as defined by a category type metadata item) and attempting to map each search topic to one or more attributes (as defined by attribute type metadata items). In alternative embodiments, however, module 104 may map search topics to a category only or to one or more attributes only (or to one or more alternative types of metadata items).

At 502, module 106 performs operations to map search topics to metadata categories. This involves operations 504 to 516 as described below.

At 504, module 106 extracts a search topic embedding for each search topic (or, specifically for each search topic's descriptor). The search topic embeddings extracted at 504 are intended to capture the semantic meaning of the search topics and may, therefore, be referred to as semantic embeddings. Processing a search topic descriptor to extract a search topic embedding may be performed using any appropriate semantic analysis technique. In the present embodiment, module 106 extracts search topic embeddings in a similar way to extracting search query embeddings as described at 406 above (e.g. by use of a trained machine learning model such as the "all-mpnet-base-v2" model or an alternative model).

At 506, module 106 extracts (or, if already available, retrieves) a category embedding for each metadata category (as defined by category type metadata items). Category embeddings may be available if they have previously been extracted and stored for retrieval. The category embeddings extracted at 506 are intended to capture the semantic meaning of the metadata categories and may, therefore, be referred to as semantic embeddings. Processing a category type metadata item to extract a category embedding may be performed various ways. In the present embodiment, module 106 extracts category embeddings in a similar way to extracting search query embeddings as described at 406 above. Specifically, module 106 processes the relevant text of each category type metadata item (that is, the text that describes the category) using a trained machine learning model such as the "all-mpnet-base-v2" model described above (though, again, alternative models may be used).

At 508, module 106 maps (or, more particularly, attempts to map) each search topic to a metadata category (as defined by a category type metadata item). This involves performing operations 510 to 516 for each search topic. Search topics may be processed in any order or in parallel.

At 510, module 106 identifies the metadata category that is most semantically similar to a selected search topic. This involves performing a semantic search between the selected search topic descriptor (as represented by its search topic embedding) and the available metadata categories (as represented by their category embeddings).

Module 106 may determine the semantic similarity between a selected search topic and a particular metadata category in various ways. In the present embodiment, module 106 calculates a similarity score for a given (selected search topic, metadata category) pair based on the search topic embedding (as extracted at 504) and the category embedding (as extracted or retrieved at 506). For a given search topic, the metadata category of the (search topic, metadata category) pair that provides the most optimal (e.g. highest) similarity score is selected as the most similar category.

Similarity scores for (search topic, metadata category) pairs may be calculated in various ways. In the present embodiment, module 106 calculates the cosine similarity between the search topic embedding and the category embedding and uses this as the similarity score. In alternative embodiments, similarity scores may be calculated based on other similarity or distance measures, for example based on Euclidian distance, Jaccard similarity, Levenshtein distance, Hamming distance, or an alternative similarity/distance measure.

At 512, module 106 determines if the most similar category for the selected search topic (as identified at 510) is sufficiently similar to the selected search topic. If so, processing proceeds to 514. If not, processing proceeds to 516.

In the present embodiment, module 106 determines if the category identified at 510 is sufficiently similar to the selected search topic based on a category similarity threshold. If the similarity score for the (search topic, most similar category) pair is greater than or equal to the category similarity threshold module 106 determines that the category is sufficiently similar. Otherwise, module 106 determines that the category is not sufficiently similar. The value of the category similarity threshold will depend on implementation and the manner in which similarity scores are calculated at 510. By way of example, where cosine similarity is calculated a category similarity threshold value of 0.5 may be appropriate (though an alternative value can be used).

At 514, module 106 maps the selected search topic to the most similar metadata category identified at 510. This mapping may be performed in any appropriate way, however generally involves associating the metadata category (or an identifier thereof) with the search topic.

At 516, module 106 has determined that the category identified at 510 is not sufficiently similar to the selected search topic. In the present embodiment, if the closest category is not sufficiently similar to the search topic module 106 determines that the search topic cannot be mapped to content item metadata and the search topic is discarded from further processing/consideration. In other embodiments, however, module 106 may continue processing the selected search topic to determine whether it can be mapped to other metadata items (e.g. metadata attributes in the present example).

Once a selected search topic has been either mapped to a metadata category (at 514) or not mapped (at 516), mapping of that search topic to a metadata category is complete.

At 518, module 106 performs operations to map search topics to metadata attributes. This involves operations 520 to 536 as described below.

At 520, module 106 extracts a search topic word embedding for each search topic word (or, specifically for each word in the search topic's descriptor). The search topic word embeddings extracted at 520 are intended to capture the semantic meaning of the search query words and may, therefore, be referred to as semantic embeddings. Processing a search topic descriptor's words to extract search topic word embeddings may be performed using any appropriate semantic analysis technique. In the present embodiment, module 106 extracts search topic word embeddings in a similar way to extracting search query embeddings as described at 406 above (e.g. by use of a trained machine learning model such as the "all-mpnet-base-v2" model or an alternative model).

At 522, module 106 extracts (or, if already available, retrieves) an attribute embedding for each metadata attribute (as defined by attribute type metadata items). The attribute embeddings extracted at 520 are intended to capture the semantic meaning of the metadata attributes and may, therefore, be referred to as semantic embeddings. Attribute embeddings may be available if they have previously been extracted and stored for retrieval. Processing an attribute type metadata item to extract an attribute embedding may be performed various ways. In the present embodiment, module 106 extracts attribute embeddings in a similar way to extracting search query embeddings as described at 406 above. Specifically, module 106 processes the relevant text of each attribute type metadata item (e.g. the value of each attribute item's key-value pair) using a trained machine learning model such as the "all-mpnet-base-v2" model described above (though, again, alternative models may be used).

At 524, module 106 maps (or, more particularly, attempts to map) each search topic word to one or more metadata attributes (as defined by attribute type metadata items). This involves performing operations 526 to 536 for each search topic. Search topics may be processed in any order or in parallel.

At 526, module 106 selects a word from the selected search topic that has not yet been processed. Search topic words may be selected for processing in any order (or may be processed in parallel).

At 528, module 106 determines semantic similarities between the selected search topic word and each metadata attribute.

Module 106 may determine the semantic similarity between a selected search topic word and a particular metadata attribute in various ways. In the present embodiment, module 106 calculates a similarity score for a given (selected search topic word, metadata attribute) pair based on the search topic word embedding (as extracted at 520) and the attribute embedding (as extracted or retrieved at 522). As discussed above with reference to 510, similarity scores may be calculated in any appropriate manner. In the present embodiment, module 106 calculates the cosine similarity between the search topic word embedding and the attribute embedding and uses this as the similarity score. In alternative embodiments, however, similarity scores may be calculated based on other similarity or distance measures.

At 530, module 106 determines if at least one metadata attribute is sufficiently similar (in a semantic sense) to the selected search topic word. If so, processing proceeds to 532. If not, processing proceeds to 534.

In the present embodiment, module 106 determines that a metadata attribute is sufficiently similar to the selected search topic word based on an attribute similarity threshold. If the similarity score for the (search topic word, metadata attribute) pair as determined at 528 is greater than or equal to the attribute similarity threshold, module 106 determines that the attribute is sufficiently similar to the selected search topic word. Otherwise, module 106 determines that the attribute is not sufficiently similar. The value of the attribute similarity threshold will depend on implementation and the manner in which similarity scores are calculated at 526. By way of example, where cosine similarity is calculated an attribute similarity threshold value of 0.8 may be appropriate (though an alternative value can be used).

At 532, module 106 maps the selected search topic word to each attribute that is determined to be sufficiently similar to the selected search topic word - that is, to each attribute for which the similarity score is greater than or equal to the attribute similarity threshold. This mapping may be performed in any appropriate way, however generally involves associating the metadata attribute(s) (or identifier(s) thereof) with the search topic word. Processing then proceeds to 534.

At 534, module 106 determines whether any words of the current search topic have not yet been processed. If all words of the current search topic have been processed, processing of the current search topic is complete (as indicated at 536). Otherwise, processing proceeds to 526 to select a further search topic word for processing.

To illustrate search topic to metadata mapping, consider an example search topic with a search topic descriptor of "Personal trainer flyer". Mapping this search topic may result in: identifying a metadata category of "flyer" and identifying a metadata attributes of "THEME: personal" and "THEME: personal trainer".

Method 500 is described sequentially. Mapping search topics to a category type metadata items (at 502) and mapping search topics to attribute type metadata items (at 518) may, however, be performed in a different order or in parallel.

The mapping processes described above with reference to 502 and 518 are described with reference to the specific the example context used in disclosure (and, therefore, with specific reference to mapping search topics to category type metadata items at 502 and attribute type metadata items at 518). In alternative contexts, however, different metadata item types may be available and mapping to different metadata item types may be appropriate.

In light of this, the processing performed at 502 may be generally referred to a first search topic to metadata mapping process that is performed to map search topics to a first metadata item type. In this case, the processing at 502 is performed to map search topics to metadata items of that first metadata item type (rather than mapping to metadata categories as specifically described). Similarly, the processing performed at 518 may be generally referred to a second search topic to metadata mapping process that is performed to map search topics to a second metadata item type. In this case, the processing at 518 is performed to map search topics to metadata items of that second metadata item type (rather than mapping to metadata attributes as specifically described). Furthermore, in certain implementations mapping search topics to a single metadata item type may be sufficient and appropriate (in which case the operations of either 502 or 518 need not be performed), or mapping to additional (e.g. third, fourth, etc.) metadata item types may be appropriate (in which case additional processing that is similar to 502 or 518 may be performed for each additional metadata item type that search topics are to be mapped to).

Referring now to FIG. 6, a method 600 for determining a content score for a search topic will be described. Method 600 may, for example, be performed at 314 of method 300 described above. In this case, method 600 is performed on a particular search topic that has been selected at 306. The search topic will have a search topic descriptor and will be mapped to (e.g. associated with) content item metadata (per 310).

The operations of method 600 will be described as being performed by module 108 of application 102. The operations could, however, be performed by one or more alternative modules of application 102, or one or more alternative applications running on system 100 and/or one or more alternative computer processing systems.

At 602, module 108 performs a search (or causes a search to be performed) in respect of the search topic. The search is performed to determine a measure of how much content provided by the content delivery platform 120 (if any) is relevant to the search topic. Module 108 may perform the search (or cause the search to be performed) at 108 in various ways.

In the present embodiment, module 108 performs a search through the search service 122 provided by the content delivery platform 120. To facilitate this, search service 122 may provide a search API that allows searches to be performed based on general text and/or specific metadata. In this case, module 108 performs a search by generating a search request in accordance with the search API and submitting that search request to the search service 122.

Continuing with the specific example of the present disclosure, the search API may facilitate searching by general text, metadata category, and metadata attributes. In this example, module 108 generates a search request with a payload that includes the search topic descriptor (corresponding to the search API general text), the metadata category that the search topic has been mapped to, and the metadata attribute(s) that the search topic has been mapped to.

In alternative implementations, the search API may facilitate searching by alternative fields that are relevant to the specific types of metadata the content delivery platform 120 provides. In still further implementations, the search API may only permit searching by a general text only, and not by any specific metadata.

In further alternative implementations, instead of performing a search via a dedicated search API, module 108 may be configured to generate a search request that is based on the search topic and its associated data (e.g. the search topic descriptor and/or mapped metadata) and perform the search using a general search engine (e.g. Google Chrome or an alternative search engine), limiting the search to the particular domain of the content delivery platform. In this case, and by way of example, module 108 may generate a single search string by concatenating the search topic descriptor and any mapped metadata and submit this as the search query to a search engine.

At 604, module 108 receives search results in respect of the search performed at 602. The search results received will depend on the manner in which the search is performed. Generally speaking, however, the search results will provide (or allow for determination of) a number of content items provided by the content delivery platform 120 that match the search topic. By way of example, the search results may provide a list of content items that match the search topic (or a list links to or identifiers of such content items).

At 606, module 108 determines a content score for the search topic. The content score is determined based on the search results and may be determined in various ways.

In the present embodiment, module 108 determines the content score to be a count of the search results that are received at 604. For example, if the search results indicate that 120 relevant content items were identified, the content score will be 120.

In certain embodiments, the search engine or search service used to perform the search may provide a relevance score for each search result. In this case, module 108 may determine the content score to be a count of the search results that are received at 604 and that have a relevance score that is greater than or equal to a relevance threshold.

Referring now to FIG. 7, there is depicted an overview 700 of the data relationships that are identified over the course of method 300, including the high level processes involved in each data relationship. As illustrated, the historical search queries are grouped together to identify a search topic (as described with reference to method 400). The search topic is then mapped to content item metadata (as described with reference to FIG. 5). A search of content is then conducted based on the search topic and mapped metadata to determine a search topic content score (as described with reference to FIG. 6). The retrieved content score is then used to determine whether the search topic is in respect of a content gap.

In the embodiments described above, all operations of method 300 are performed (or are caused to be performed) by application 102 of system 100. In alternative implementations, certain operations may be performed by other applications running on other systems.

As one example, in one alternative embodiment application 102 performs (or causes performance of) operations to identify search topics from historical search data. In the example embodiments described above this includes operations 302, 304, 306, and 310. Application 102 may identify search topics on demand (e.g. in response to a specific requests, for example from content delivery platform 120 or a user thereof) or may be configured to automatically identify search topics on a periodic basis (e.g. weekly, monthly, or any other period). Once search topics have been identified, application 102 may provide these (and associated data) to the content delivery platform in question (e.g. platform 120). For example, application 102 may generate a search topics message and communicated this to an appropriate application, service, or user of the content delivery platform 120. The search topics message may include, for each search topic identified, data that defines the search topic descriptor for the search topic and data that defines (or identifies) the content item metadata that the search topic has been mapped to. On receipt of a search topic message, the content delivery platform 120 may then determine whether one or more of the search topics identified in the search topic message corresponds to a content gap - e.g. by performing operations 314, 316, and 318. The content delivery platform may be configured so that search topic messages are provided in a defined format and received by a service or application that is configured to receive search topic messages and, on receipt, to automatically extract the relevant information from a given search topic message and perform operations 314, 316, and 318. Alternatively, search topic message may be communicated to a (human) user of the content delivery platform 120 (e.g. an administrator or the like tasked with content gap discovery) who may then manually trigger performance of operations 314, 316, and 318.

The techniques described herein may be used (or be adapted to be used) in other contexts. For example, the techniques described may be used to assist understanding of user behaviour. More specifically, identifying content gaps may contribute to the understanding of whether users are engaging with a content delivery platform (or a particular type of content item provided thereby) due to the presence or lack of content versus other factors.

Further examples of specific feature combinations taught within the present disclosure are set out in the following numbered clauses.
Clause 1. A computer implemented method for identifying a plurality of search topics, the method including:
   retrieving, from a search query database, historical search data, the historical search data including a plurality of historical search queries, each historical search query corresponding to a historical search for content items provided by a content delivery platform;
   processing each historical search query using a machine learning model to extract a corresponding search query embedding, wherein the machine learning model is trained to extract search query embeddings that allow for semantically similar historical search queries to be identified;
   processing the search query embeddings using a clustering technique to determine a plurality of clusters, wherein a first cluster of the plurality of clusters corresponds to a first search topic and is associated with a first group of semantically similar historical search queries;
   generating a first search topic descriptor for the first search topic, wherein the first search topic descriptor is a phrase that is representative of a semantic meaning of the historical search queries within the first cluster's group of historical search queries.
Clause 2. The computer implemented method of clause, wherein processing the search query embeddings using the clustering technique includes:
   performing a first clustering operation on the historical search data to determine a set of first search query clusters, each first search query cluster associated with a set of one or more of the historical search queries; and
   for each first search query cluster, performing a second clustering operation to determine a set of second search query clusters.
Clause 3. The computer implemented method of clause 1 or clause 2, wherein the first search topic descriptor is generated by processing the historical search queries within the first cluster's group of historical search queries using a class-based term frequency - inverse document frequency process.
Clause 4. The computer implemented method of any one of clauses 1 to 3, further including mapping the first search topic to content item metadata, the content item metadata being metadata associated with the content items provided by the content delivery platform.
Clause 5. The computer implemented method of clause 4, wherein the content item metadata includes a plurality of metadata categories and mapping the first search topic to content item metadata includes:
   performing a semantic search to identify a first metadata category, the first metadata category being the metadata category that is the most semantically similar to the first search topic descriptor; and
   mapping the first search topic to the first metadata category.
Clause 6. The computer implemented method of clause 5, wherein performing the sematic search to identify the first metadata category includes:
   processing the first search topic descriptor using a machine learning model to extract a semantic search topic embedding;
   processing each metadata category using the machine learning model to extract a corresponding semantic category embedding;
   calculating, based on the semantic search topic embedding and the semantic category embeddings, a set of search topic/category similarity scores, each search topic/category similarity score providing a measure of similarity between the first search topic and a particular metadata category; and
   identifying the first metadata category based on the set of search topic/category similarity scores.
Clause 7. The computer implemented method of any one of clauses 4 to 6, wherein the content item metadata includes a plurality of metadata attributes and mapping the first search topic to content item metadata includes:
   performing a semantic search to identify a first metadata attribute, the first metadata attribute being a metadata attribute that is sufficiently semantically similar to a first word of the first search topic descriptor; and
   mapping the first search topic to the first metadata attribute.
Clause 8. The computer implemented method of clause 7, wherein performing the sematic search to identify the first metadata attribute includes:
   processing the first word of the first search topic descriptor using a machine learning model to extract a first semantic search topic word embedding;
   processing each metadata attribute using the machine learning model to extract a corresponding semantic attribute embedding;
   calculating, based on the semantic search topic word embedding and the semantic attribute embeddings, a set of search topic word/attribute similarity scores, each search topic word/attribute similarity score providing a measure of similarity between the first word of the first search topic and a particular metadata attribute; and
   identifying the first metadata attribute based on the set of search topic word/attribute similarity scores.
Clause 9. The computer implemented method of clause 7 or clause 8, wherein mapping the first search topic to content item metadata further includes:
   performing a semantic search to identify a second metadata attribute, the second metadata attribute being a metadata attribute that is sufficiently semantically similar to a second word of the first search topic descriptor; and
   mapping the first search topic to the second metadata attribute.
Clause 10. The computer implemented method of any one of clauses 1 to 9, further including calculating a first opportunity score for the first search topic.
Clause 11. The computer implemented method of clause 10, wherein the first opportunity score is calculated based on a number of historical search queries within the first cluster's group of historical search queries.
Clause 12. The computer implemented method of clause 10, wherein calculating the first opportunity score includes:
   determining a search volume for the first search topic, the search volume providing a measure of a number of searches that were performed in a predefined period and that relate to the first search topic; and
   calculating the first opportunity score based on the search volume.
Clause 13. The computer implemented method of any one of clauses 1 to 12, wherein the plurality of historical search queries includes a plurality of internal historical search queries, each internal historical search query corresponding to a search performed using a search function of the content delivery platform.
Clause 14. The computer implemented method of any one of clauses 1 to 13, wherein the plurality of historical search queries includes a plurality of external historical search queries, each external historical search query corresponding to a search performed using a search function provided by an entity other than the content delivery platform.
Clause 15. A computer processing system including:
   one or more computer processing units; and
   non-transitory computer-readable medium storing instructions which, when executed by the one or more computer processing units, cause the one or more computer processing units to perform a method according to any one of clauses 1 to 14.
Clause 16. Non-transitory storage storing instructions executable by one or more computer processing units to cause the one or more computer processing units to perform a method according to any one of clauses 1 to 14.

The flowcharts illustrated in the figures and described above define operations in particular orders to explain various features. In some cases the operations described and illustrated may be able to be performed in a different order to that shown/described, one or more operations may be combined into a single operation, a single operation may be divided into multiple separate operations, and/or the function(s) achieved by one or more of the described/illustrated operations may be achieved by one or more alternative operations. Still further, the functionality/processing of a given flowchart operation could potentially be performed by (or in conjunction with) different applications running on the same or different computer processing systems.

In the embodiments described above, processing is performed by a single application 102 running on a single computer processing system 100. Alternatives are, however, possible.

For example, one or more of modules 104, 106, and/or 108 may be distinct applications (running on the same or separate computer processing systems) that interoperate with application 102 to perform the described techniques.

As another example, the functions performed by modules 104, 106, and/or 108 may be combined together in a content gap discovery package that can be used to extend the functionality provided by an existing application (as one example, the functionality provided by a search service such as 122 of content delivery platform 120). In this case the content gap discovery package may be locally installed on a given system, e.g. as a plug-in or extension to an existing application.

As yet another example, the functions performed by modules 104, 106, and/or 108 may be combined together in a content gap discovery service that can be accessed by any appropriate application (e.g. a web browser or other application).

Unless otherwise stated, the terms "include" and "comprise" (and variations thereof such as "including", "includes", "comprising", "comprises", "comprised" and the like) are used inclusively and do not exclude further features, components, integers, steps, or elements.

In certain instances the present disclosure may use the terms "first," "second," etc. to describe various features. Unless stated otherwise, these terms are used only to distinguish features from one another and not in an ordinal sense. For example, and unless context requires otherwise, a first feature could be termed a second feature or vice versa without departing from the scope of the described examples. Furthermore, when the terms "first", "second", etc. are used to differentiate features rather than indicate order, a second feature could exist without a first feature. For example, a second feature could occur before a first feature (or without a first feature ever occurring/existing).

Certain features of the present disclosure are explicitly described as being optional. If a particular feature is not explicitly described as being optional, however, this is not intended to indicate that the feature is essential or required. In many cases a feature that is not explicitly described as being optional may be omitted or may be substituted with a variation of the feature as described.

It will be understood that the embodiments disclosed and defined in this specification extend to alternative combinations of two or more of the individual features mentioned in or evident from the text or drawings. All of these different combinations constitute alternative embodiments of the present disclosure.

The present specification describes various embodiments with reference to numerous specific details that may vary from implementation to implementation. No limitation, element, property, feature, advantage or attribute that is not expressly recited in a claim should be considered as a required or essential feature. Accordingly, the specification and drawings are to be regarded in an illustrative rather than a restrictive sense.

## Claims

1. A computer implemented method including:
retrieving, from a search query database, historical search data, the historical search data including a plurality of historical search queries, each historical search query corresponding to a historical search for content items provided by a content delivery platform;
processing the historical search data to determine a plurality of search topics, each search topic corresponding to a group of semantically similar historical search queries;
selecting a first search topic from the plurality of search topics;
generating a first search topic descriptor corresponding to the first search topic;
performing a first search, wherein the first search is a search for content items provided by the content delivery platform that are relevant to the first search topic, and wherein performing the first search causes generation of a first set of search results;
determining, based on the first set of search results, a first content score that provides a measure of how much content provided by the content delivery platform is relevant to the first search topic;
determining, based on the first content score, whether a content gap exists for the first search topic; and
in response determining that the content gap exists for the first search topic, generating a first content gap alert indicating that the content gap exists for the first search topic.

2. The computer implemented method of claim 1, wherein processing the historical search data to determine the plurality of search topics includes processing the historical search data according to a clustering technique to determine a plurality of historical search query clusters.

3. The computer implemented method of claim 2, further including processing each historical search query using a machine learning model to extract a corresponding search query embedding, wherein the machine learning model is trained to extract search query embeddings that allow for semantically similar search queries to be identified, and wherein processing the historical search data according to the clustering technique includes clustering the search query embeddings.

4. The computer implemented method of claim 2 or claim 3, wherein processing the historical search data according to the clustering technique includes:
performing a first clustering operation on the historical search data to determine a set of first search query clusters, each first search query cluster associated with a set of one or more of the historical search queries; and
for each first search query cluster, performing a second clustering operation to determine a set of second search query clusters,
and wherein each second search query cluster corresponds to a search topic.

5. The computer implemented method of any one of claims 1 to 4, wherein the first search topic descriptor is generated by processing the historical search queries in the group of semantically similar historical search queries that the first search topic corresponds to using a class-based term frequency - inverse document frequency process.

6. The computer implemented method of any one of claims 1 to 5, further including mapping the first search topic to content item metadata, the content item metadata being metadata associated with the content items provided by the content delivery platform.

7. The computer implemented method of claim 6, wherein the content item metadata includes a plurality of metadata categories and mapping the first search topic to content item metadata includes:
performing a semantic search to identify a first metadata category, the first metadata category being the metadata category that is the most semantically similar to the first search topic descriptor; and
mapping the first search topic to the first metadata category.

8. The computer implemented method of claim 7, wherein performing the sematic search to identify the first metadata category includes:
processing the first search topic descriptor using a machine learning model to extract a semantic search topic embedding;
processing each metadata category using the machine learning model to extract a corresponding semantic category embedding;
calculating, based on the semantic search topic embedding and the semantic category embeddings, a set of search topic/category similarity scores, each search topic/category similarity score providing a measure of similarity between the first search topic and a particular metadata category; and
identifying the first metadata category based on the set of search topic/category similarity scores.

9. The computer implemented method of any one of claims 6 to 8, wherein the content item metadata includes a plurality of metadata attributes and mapping the first search topic to content item metadata includes:
performing a semantic search to identify a first metadata attribute, the first metadata attribute being a metadata attribute that is sufficiently semantically similar to a first word of the first search topic descriptor; and
mapping the first search topic to the first metadata attribute.

10. The computer implemented method of claim 9, wherein performing the sematic search to identify the first metadata attribute includes:
processing the first word of the first search topic descriptor using a machine learning model to extract a first semantic search topic word embedding;
processing each metadata attribute using the machine learning model to extract a corresponding semantic attribute embedding;
calculating, based on the semantic search topic word embedding and the semantic attribute embeddings, a set of search topic word/attribute similarity scores, each search topic word/attribute similarity score providing a measure of similarity between the first word of the first search topic and a particular metadata attribute; and
identifying the first metadata attribute based on the set of search topic word/attribute similarity scores.

11. The computer implemented method of claim 9 or claim 10, wherein mapping the first search topic to content item metadata further includes:
performing a semantic search to identify a second metadata attribute, the second metadata attribute being a metadata attribute that is sufficiently semantically similar to a second word of the first search topic descriptor; and
mapping the first search topic to the second metadata attribute.

12. The computer implemented method of any one of claims 6 to 11, wherein the first search is performed by generating a first search request and submitting the first search request to a search service provided by the content delivery platform, and wherein the first search request includes one or both of: data based on the content item metadata that the first search topic descriptor is mapped to; and the first search topic descriptor.

13. The computer implemented method of any one of claims 1 to 12, further including:
calculating a first opportunity score for the first search topic, wherein the first opportunity score is calculated based on a number of historical search queries that in the group of semantically similar historical search queries that the first search topic corresponds to; and selecting the first search topic based on the first opportunity score.

14. The computer implemented method of any one of claims 1 to 13, wherein the plurality of historical search queries includes:
a plurality of internal historical search queries, each internal historical search query corresponding to a search performed using a search function of the content delivery platform; and/or
a plurality of external historical search queries, each external historical search query corresponding to a search performed using a search function provided by an entity other than the content delivery platform.

15. A computer processing system including:
one or more computer processing units; and
non-transitory computer-readable medium storing instructions which, when executed by the one or more computer processing units, cause the one or more computer processing units to perform a method according to any one of claims 1 to 14.
